**Europäisches Patentamt**

**European Patent Office**

**Office européen des brevets**

(19)

(11) Publication number : **0 420 271 B1**

(12) # EUROPEAN PATENT SPECIFICATION

(45) Date of publication of patent specification :
**21.12.94 Bulletin 94/51**

(51) Int. Cl.⁵ : **H01B 1/24, H01B 3/44**

(21) Application number : **90118686.6**

(22) Date of filing : **28.09.90**

(54) Insulated electrical conductors.

(30) Priority : **29.09.89 US 414270**

(43) Date of publication of application :
**03.04.91 Bulletin 91/14**

(45) Publication of the grant of the patent :
**21.12.94 Bulletin 94/51**

(84) Designated Contracting States :
**AT BE CH DE FR GB IT LI NL SE**

(56) References cited :
**FR-A- 2 537 984**
**US-A- 4 150 193**
**US-A- 4 286 023**
**US-A- 4 412 938**

(73) Proprietor : **UNION CARBIDE CHEMICALS
AND PLASTICS COMPANY, INC.
39 Old Ridgebury Road
Danbury Connecticut 06817-0001 (US)**

(72) Inventor : **Burns, Norman Marshall
290 Mobus Avenue
No. Plainfield, New Jersey 070560 (US)**
Inventor : **Kharazi, Asghar
13 Gifford Road
Somerset, New Jersey 08873 (US)**

(74) Representative : **Weinhold, Peter, Dr. et al
Patentanwälte Dipl.-Ing. G. Dannenberg
Dr. P. Weinhold
Dr. D. Gudel
Dipl.-Ing. S. Schubert
Dr. P. Barz
Siegfriedstrasse 8
D-80803 München (DE)**

EP 0 420 271 B1

## Description

This invention relates to vulcanizable semiconductive compositions which provide strippable semiconductive insulation shielding compositions for insulated electrical conductors.

The construction of insulated electrical conductors, i.e, wires and cables, designed for medium to high voltage applications is well known in the art and commonly includes a core conductor which comprises one or more strands of a conducting metal or alloy such as copper or aluminum, a layer of semiconductive shielding, a layer of insulation, such as crosslinked polyethylene or ethylenepropylene rubber and a layer of semiconductive insulation shielding overlying said insulation. A plurality of neutral wires which are usually made of copper may be embedded in or wrapped around the layer of semi-conducting insulation shielding, if desired, in the form of a concentric ring around the insulated cable.

The conductor shield, the insulation layer and its overlying semiconductive shielding layer can be formed in the art by what is known as a two pass operation or by a single pass triple extrusion process. The two pass operation is one in which the conductor shield and insulation are first extruded in tandem and crosslinked prior to extrusion and crosslinking of the semiconductive insulation shielding layer. In the single pass triple extrusion operation (sometimes a tandem extrusion when the conductor shield is first extruded followed by the extrusion of the insulation and insulation shield in a dual extrusion head) the semiconductive conductor shielding layer, the insulation layer, and the overlying semiconductive insulation shielding layer are extruded in a common extrusion head and cured (crosslinked) simultaneously in a single operation to minimize manufacturing steps and contamination between layers. For obvious reasons the single pass triple extrusion method is preferred by manufacturers. However, the simultaneous curing of the insulation layer and its overlying semiconductive shielding layer of the triple extrusion method in general makes the shielding layer more fully bonded in most cases to the insulation than it might be if it were made as a result of a two pass operation.

The formation of the bond between the insulation and insulation shielding layer makes subsequent separation of the two layers (insulation and semiconductive shielding) such as occurs in making splices or terminal connections, very difficult and time consuming. Such a strong bond also makes the semiconductive layer prone to leave carbon residue on the insulation even when it is finally peeled off. Accordingly, a strippable semiconductive shielding which can be easily and cleanly stripped from the insulation of an insulated conductor that has been made by a single pass triple extrusion operation is therefore very desirable in this art.

Normally it has been the custom to fabricate the insulation shield from ethylene vinylacetate (EVA) and acrylonitrile-butadiene rubber (NBR) mixtures utilizing a high surface carbon black i.e., a 120-270 $m^2$ per gram surface area carbon black to achieve the required conductivity. Unfortunately however this presents problems in that it is difficult to disperse the carbon black resulting in a roughened surface of the insulation shield, and more significantly it is more difficult to pull the insulation shield from the insulation at the appropriate time by the installer. In addition, as mentioned previously, unduly high adhesion between the insulation shield and the insulation results in deposits of carbon residue in the insulation at the time of peeling. This can promote treeing in the insulation which can ultimately lead to an electrical breakdown of the cable.

The prior art is constantly seeking to provide vulcanizable semiconductive compositions that can be used to provide strippable insulation shielding compositions for electrical conductors. Thus, according to US-A-4,150,193, there is provided a vulcanizable semiconductive insulation shielding composition consisting essentially of, based on the total weight of said composition, (A) about 40 to 90 weight percent of an ethylene-vinyl acetate copolymer containing from about 27 to 45 weight percent of vinyl acetate based on the total weight of said copolymer, (B) about 3 to about 15 weight percent of a low density low molecular weight polyethylene homopolymer having a number average molecular weight of about 2,000 to about 10,000, a density of about 0.85 up to about 0.93 grams per cubic centimiter and a melt index of 20 to 500 when measured according to ASTM D-1238 at 125°C, (C) about 8 to about 45 weight percent of carbon black, and (D) about 0.2 to about 5 weight percent of an organic peroxide crosslinking agent.

This reference differs from the instant invention in that there is no acrylonitrile-butadiene rubber in the patented composition and the carbon black utilized in the examples has a surface area of 68 $m^2$/gm.

In addition, US-A-4,246,142 discloses the components of the instant invention however, the carbon black utilized was not a low surface area carbon black as employed in the instant invention.

Finally, US-A-3,873,494 FR-A-1,258,665 disclose compositions similar to the instant invention composition however, they do not disclose the specific type of carbon black of the instant invention nor the advantages to be derived from their use.

It has now been discovered that an insulation shield for a strippable semiconductive insulation shielding composition for electrical insulative conductor can be fabricated according to the present invention which ameliorates the prior art difficulties and which provides a peelable insulation shield which can be easily peeled by the installer and which leaves substantially no carbon black residue on the insulator.

Broadly contemplated therefore, the present invention provides a vulcanizable semiconductive insulation shielding composition consisting essentially of, based on the total weight of said composition, (A) about 40 to 65 weight percent of an ethylene-vinyl acetate copolymer containing from about 27 to 45 weight percent of vinyl acetate based on the total weight of said copolymer, (B) about 5 to about 30 weight percent of an acrylonitrile-butadiene copolymer containing from about 25 to about 55 percent by weight of acrylonitrile based on the total weight of said copolymer, (C) about 25 to about 45 weight percent of carbon black having a surface area of 30 to 60 $m^2$ per gram, and (D) about 0.2 to about 5 weight percent of an organic peroxide crosslinking agent.

The present invention also provides an article of manufacture comprising the crosslinked product of the vulcanizable semiconductive shielding composition of this invention defined above bonded directly to a crosslinked polyolefin substrate. Said article of manufacture may take any shape or form desired, e.g., it could be a laminated plaque or sheet, which is obviously useful in determining whether or not said crosslinked product would be useful as an easily strippable insulation shielding for an electrical conductor as explained above.

More preferably, the crosslinked polyolefin of said article of manufacture of this invention is the primary insulation of an insulated electrical conductor, the crosslinked product of said vulcanizable composition being the external semiconductive shielding for said insulation. Accordingly, the preferred article of manufacture of this invention may be more specifically described as an insulated electrical conductor e.g., electrical wire, electrical cable, containing as the primary insulation, a crosslinked polyolefin and as the external semiconductive shielding for said insulation, the crosslinked product obtained upon crosslinking the vulcanizable semiconductive insulation shielding composition of this invention which has been already previously defined above.

The vulcanizable ethylene-vinyl acetate copolymers and/or their method of preparation, which can be employed in this invention are well known in the art. The ethylene-vinyl acetate copolymer employed herein should contain from about 27 to about 45 weight percent of vinyl acetate based on the total weight of said copolymer for it is considered that copolymers containing less than 27 weight percent vinyl acetate may lead to semiconductive insulation shieldings having poorer strippability; while copolymers having more than 45 weight percent of vinyl acetate may be too difficult to compound due to their low melting points. The amount of ethylene-vinyl acetate copolymer present in the vulcanizable semiconductive insulation shielding compositions of this invention can range from about 40 to about 65 weight percent based on the total weight of the vulcanizable composition, preferably about 40 to 60 weight percent. Of course it is understood that while it is generally preferred to employ only one type of ethylene-vinyl acetate copolymer in a given composition, the vulcanizable compositions of this invention also include and encompass the use of mixtures of two or more ethylene-vinyl acetate copolymers having different amounts of vinyl acetate.

The vulcanizable acrylonitrile-butadiene copolymers and/or methods for their preparation are well known in the art. Such copolymers are also commonly referred to in the art as nitrile rubber or simply NBR. The acrylonitrile-butadiene copolymers employable in this invention can contain from about 25 to about 55 weight percent of acrylonitrile based on the total weight of the copolymer, preferably about 30 to about 35 weight percent. Of course, if desired, mixtures of such copolymers having different weight percents of acrylonitrile can also be employed.

The type of carbon black which is employed in the present invention is critical and must be employed within the ranges provided in order to secure the benefits of the invention. Thus, any carbon black such as furnace blacks, channel blacks or acetylene blacks can be employed provided however that they are electrically conductive and provided further that they are low surface area blacks in the range of 30 to 60 $m^2/g$, preferably in the range of 40 to 50 $m^2/g$. The use of carbon black having surface areas below 30 $m^2/g$ would lower adhesion, however excessive amounts of carbon black may have to be employed in order to compensate for lower conductivities experienced. The use of carbon black having surface areas above 60 $m^2/g$ would result in excessive adhesion levels.

The amount of carbon black present in the composition is in the range of about 25 to about 45 weight percent based on the total weight of the composition, preferably about 35 to 40%.

Any peroxide crosslinking agent used in heretofore conventional semiconductive compositions can be employed in this invention. Illustrative examples of such peroxide crosslinking agents include e.g., di-alpha-cumyl peroxide and 2,5-dimethyl-2,5-di(tertiary-butylperoxy)-hexene While the preferred amount of crosslinking agent employed herein may vary depending upon the particular copolymers employed and other such obvious conditions, said amount of crosslinking agent will fall within the range of about 0.2 to 5, preferably about 0.6 to 2, weight percent based on the total weight of the vulcanizable semiconductive composition.

Whether or not a particular vulcanizable composition will furnish a crosslinked polyolefin insulated electrical conductor with a strippable semiconductive insulation shielding may be generally determined by measuring the adhesion between a laminate of crosslinked polyolefin and the crosslinked product of the vulcanizable semiconductive composition according to ASTM-D903. While the actual adhesion levels of such layers on a conductor may be slightly higher than that obtained from the corresponding laminate, the above test serves as a useful guideline for predetermining such results.

Of course, it is to be also understood that the vulcanizable semiconductive insulation shielding composition of this invention, if desired, can contain other conventional additives in the conventionally used quantities commonly employed in semiconductive compositions. Examples of such additives include e.g., age resistors, processing aids, stabilizers, antioxidants, crosslinking boosters and retarders, pigments, fillers, lubricants, ultraviolet stabilizers and antiblock agents. The total amount of such additives which are commonly used normally amounts to no more than about 0.05 to 3 percent by weight based on the total weight of the insulation shielding composition. For instance, it is generally preferred to employ about 0.2 to about 1 percent by weight based on the total weight of the insulation shielding composition of an antioxidant such as polymerized 1,2-dihydro-2, 2,4-trimethylquinoline.

As pointed out above, another aspect of this invention may be described as an article of manufacture comprising the crosslinked product of the vulcanizable semiconductive shielding composition of this invention defined above bonded directly to a crosslinked polyolefin substrate. Said article of manufacture may take any shape or form desired, e.g., it could be a laminated plaque or sheet, which is obviously useful in determining whether or not said crosslinked product would be useful as an easily strippable insulation shielding for an electrical conductor as explained above.

More preferably, the crosslinked ethylene copolymer of said article of manufacture of this invention is the primary insulation of an insulated electrical conductor, the crosslinked product of said vulcanizable composition being the external semiconductive shielding for said insulation. Accordingly, the preferred article of manufacture of this invention may be more specifically described as an insulated electrical conductor e.g., electrical wire, electrical cable, etc. containing as the primary insulation, a crosslinked polyolefin and as the external semiconductive shielding for said insulation, the crosslinked product obtained upon crosslinking the vulcanizable semiconductive insulation shielding composition of this invention which has been already previously defined above.

The use of articles of manufacture containing a crosslinked shielding directly bonded to a crosslinked polyolefin substrate and the manner of their preparation are so well known that no further discussion is required to enable one skilled in the art to understand how to produce and use said articles. For instance, the vulcanizable semiconductive shielding composition can be extruded over a crosslinked polyolefin substrate and cured (crosslinked) thereon or it can be extruded over an uncrosslinked polyolefin substrate and both crosslinkable layers simultaneously cured. Moreover use of polyolefin insulation compositions which if desired, may contain conventional additives such as fillers, age resistors, talc, clay, calcium carbonate and other processing aides, along with a conventional crosslinking agent is well known in the art as are conventional semiconductive conductor shielding compositions.

The following examples are illustrative of the present invention and are not to be regarded as limitative. It is to be understood that all parts, percentages and proportions referred to herein and in the appended claims are by weight unless otherwise indicated.

GLOSSARY

EVA - ethylene-vinyl acetate copolymer
NBR - butadiene-acrylonitrile copolymer

EXAMPLE 1 AND COMPARATIVE EXAMPLES 1 AND 2

Three vulcanizable semiconductive compositions containing the following ingredients were prepared, the amounts of all the ingredients in each composition being based on the total weight of each composition.

## TABLE I

| Vulcanizable Composition | Example 1 (wt. %) | Comp. Ex. 1 (wt. %) | Comp. Ex. 2 (wt. %) |
|---|---|---|---|
| EVA* | 43.4 | 43.4 | 43.4 |
| NBR** | 14.7 | 14.7 | 14.7 |
| Carbon Black 1[1] | 37.3 | ---- | ---- |
| Carbon Black 2[2] | ---- | 37.3 | ---- |
| Carbon Black 3[3] | ---- | ---- | 37.3 |
| Stabilizer | 2.8 | 2.8 | 2.8 |
| Dicumyl Peroxide | 1.8 | 1.8 | 1.8 |

*Ethylene (about 67 wt. %)/Vinyl Acetate (about 33 wt. %) Copolymer; Melt Index about 30.

**Butadiene (about 67 wt. %)/Acrylonitrile (about 33 wt %) Copolymer Elastomer; Mooney Viscosity about 50.

[1]ASTM N-550 Grade; Surface Area 42 $m^2$/g.

[2]ASTM N-351 grade; Surface Area 68 $m^2$/g.

[3]P Black; Surface Area 170 $m^2$/g.

Each composition was formed in the same manner by uniformly admixing the components thereof in a laboratory batch intensive mixer. After charging the ingredients, the mixer rotors were run with the ram down until fluxing occurred. At this point the ram was raised to turn the batch. The ram was then lowered again and the mixing completed and the batch removed when the temperature reached 110°C.

In order to evaluate the strippability properties of these compositions as semi-conducting insulation shieldings, each composition was respectively used to prepare a polyethylene/ethylene-vinyl acetate/acrylonitrile-butadiene admixture laminate. Such laminates were prepared from laboratory test plaques, the polyethylene plaque in each instance was derived from a crosslinkable polyethylene homopolymer composition consisting of polyethylene homopolymer (98%) having a number average molecular weight of about 25,000 to 30,000 and a melt index of about 2 (ASTM-D-1238 at 190°C), dicumyl peroxide (2%) and anti-oxidants (0.4%); the ethylene-vinyl acetate/acrylonitrile-butadiene (EVA/NBR) admixture plaques being derived from the vulcanizable compositions of Example 1 and Comparative Examples 1 and 2 above.

The polyethylene/EVA/NBR admixture laminates were made by first molding the crosslinkable polyethylene plaques in a cavity mold measuring (20 cm x 20 cm x 0.19 cm) 8″ x 8″ by 0.075″. The mold was placed in a press and preheated to 120°C. After five minutes at a pressure of 13.8 MPa (2,000 psi), the pressure was increased to 345 MPa (50,000 psi) and after a further 3 minutes, the mold was cooled at a rate of approximately 10°C/min at the same pressure. This method was used to prepare uncrosslinked plaques. The uncured vulcanizable EVA/NBR admixture plaques (measuring 20 cm x 20 cm x 0.19 cm (8″ x 8″ by 0.075″)) were thereafter separately molded under the same conditions. Laminates were then made by pressing each vulcanizable EVA/NBR admixture plaque together with one of the uncrosslinked polyethylene plaques. A strip of a polyester film was placed between the semiconductive layer and the insulation layer along one edge to separate the two layers for a length of approximately 2.5 cm (1″). The laminates were then simultaneously crosslinked at 180°C and 69 MPa (10,000 psi) pressure for 15 minutes. The crosslinked laminates were then cooled at approximately 10°C/min at the same pressure. This procedure is intended to simulate the extrusion and crosslinking of cables manufactured by the triple extrusion process.

5

After cooling to room temperature for 24 hours, the adhesion between the laminates was tested by measuring the force required to peal the semiconductive EVA/NBR layer from the polyethylene insulation on 20 cm x 1.25 cm (8" x 1/2") strips punched from the test laminates. The polyester film separating the ends of the layers was removed. The free edges of the layers were pulled apart approximately 1.25 cm (1/2") to initiate the peeling. Testing was done on an Instron tensile tester by clamping the free edge of the EVA/NBR layer in the upper jaw of the machine and with the laminate being anchored on a fly-wheel fixture which was mounted on the Instron tester. The force in kg (pounds) necessary to peel or strip the semiconductive EVA/NBR layer from the polyethylene insulation at an angle of 90° was recorded. The test results for each laminate (said results representing the average for testing at least five laminates for each vulcanizable semiconductive composition) are given in TABLE II below.

## TABLE II

| Example | Laminate Adhesion, kg/1.25 cm strip (lbs/half inch strip) |
|---------|-----------------------------------------------------------|
| Example 1 | 2.6 (5.8) |
| Comp. Example 1 | 3.6 (7.9) |
| Comp. Example 2 | 6.5 (14.3) |

The dispersion of carbon black in the semiconductive admixture was evaluated by extruding a flat 10 cm (4") wide and 0.5 mm (20 mils) thick tape and the surface quality was examined visually. The carbon black dispersion appearance for each vulcanizable semiconductive composition is given in TABLE III below.

## TABLE III

| Example | Carbon Black Dispersion Appearance |
|---------|-------------------------------------|
| Example 1 | Smooth |
| Comp. Example 1 | Slightly Improved |
| Comp. Example 2 | Sandy |

While the crosslinked semiconductive EVA/NBR shielding layer was stripped clean from the crosslinked polyethylene insulation in each of Example 1 and Comparative Examples 1 and 2, the above results show that the use of carbon black (ASTM N-550 grade) with a surface area of 42 $m^2/g$ in the semiconductive EVA/NBR composition substantially reduced the adhesion to crosslinked polyethylene insulation by as much as 27 to 60% when the semiconductive composition and polyethylene were simultaneously covulcanized in a laminate form. In addition, the use of carbon black (ASTM N-550 grade) with a surface area of 42 $m^2/g$ in the semiconductive EVA/NBR composition substantially improves the dispersion of carbon black in the EVA/NBR admixture and results in a smoother extruded insulation shield surface.

EXAMPLE 2

The vulcanizable semiconductive composition of Example 1 above was used to prepare an insulated electrical cable in the following manner.

A standard aluminum conductor was sequentially covered with an ordinary semiconductive conductor shielding layer (0.64 mm (0.025") thick); an insulation layer (6.60 mm (0.260") thick) derived from a crosslinkable polyethylene homopolymer (98%) having a number average molecular weight of about 25,000 to 30,000 and a melt index of about 2 (ASTM D-1238 at 190°C), dicumyl peroxide (2%) and anti-oxidants (0.4%); and a semiconductive insulation shielding layer (1.40 mm (0.055") thick) derived from the vulcanizable EVA/NBR containing composition of Example 1 above.

In preparing the cable, all three layers of conductor shielding, insulation and insulation shielding were extruded sequentially and simultaneously cured either in a steam or in a dry nitrogen vulcanizable tube. This process procedure is conventionally known in the art as a single pass triple extrusion.

The adhesion of the insulation shielding to the insulation of the insulated cable was determined by the same method as described in Example 1 above. The insulation shielding was stripped clean and in one piece from the insulation and exhibited an adhesion level of 4.5 to 5.4 kg (10 to 12 pounds) per 1.25 cm (half-inch) strip, this demonstrating the excellent strippability of the insulation shielding composition as described in Example 1 of this invention.

A comparative insulated electrical cable was prepared and tested in the same manner using the insulation shielding composition of Comparative Example 2 above which contains carbon black (P grade) with a surface area of 170 m²/g. The insulation was stripped clean and in one piece, but exhibited an adhesion level of 5.4 to 9.1 kg (12 to 20 pounds) per 1.25 cm (half-inch) strip.

## Claims

1. A vulcanizable semiconductive insulation shielding composition consisting essentially of, based on the total weight of said composition,
   (A) 40 to 65 weight percent of an ethylene-vinyl acetate copolymer containing from 27 to 45 weight percent of vinyl acetate based on the total weight of said copolymer,
   (B) 5 to 30 weight percent of an acrylonitrile butadiene copolymer containing from 25 to 55 percent by weight of acrylonitrile based on the total weight of said copolymer,
   (C) 25 to 45 weight percent of carbon black having a surface area of 30 to 60 $m^2$ per gram, and
   (D) 0.2 to 5 weight percent of an organic peroxide crosslinking agent.

2. A vulcanizable composition according to claim 1 wherein said carbon black has a surface area of 40 to 50 $m^2$/g.

3. A vulcanizable composition according to at least one of the claims 1-2 wherein said carbon black is present in said composition in an amount of 35 to 40% based on the weight of the composition.

4. A vulcanizable composition according to at least one of the claims 1-3 wherein said ethylene-vinyl acetate copolymer is present in said composition in an amount of 40 to 60% based on the weight of said composition.

5. An article of manufacture comprising the crosslinked product of a vulcanizable semiconductive composition as defined in at least one of the claims 1-4.

6. An article of manufacture according to claim 5 wherein the carbon black present in said vulcanizable semiconductive composition has a surface area of 40 to 50 $m^2$/g.

7. An article of manufacture according to at least one of the claims 5-6 wherein the carbon black present in said vulcanizable semiconductive composition is present in an amount of 35 to 40 weight percent based on the weight of said composition.

8. An article of manufacture according to at least one of the claims 5-7 wherein the the ethylene-vinyl acetate copolymer present in said vulcanizable semiconductive composition is present in an amount of 40 to 60% based on the weight of said composition.

9. An electrical conductor having as a semiconductive layer therein the composition or the crosslinked product of the composition of at least one of the claims 1-4.

10. The composition or the crosslinked product of the composition of at least one of the claims 1-4 directly bonded to a crosslinked polyolefin substrate.

## Patentansprüche

1. Vulkanisierbare halbleitende Isolierungs-Abschirmzusammensetzung, im wesentlichen bestehend aus (bezogen auf das Gesamtgewicht der genannten Zusammensetzung):
   (A) 40-65 Gew.-% eines Ethylen-Vinylacetat-copolymers, das 27-45 Gew.-% Vinylacetat, bezogen auf das Gesamtgewicht des genannten Polymers enthält,

(B) 5-30 Gew.-% eines Acrylnitril-Butadien-Copolymers, das 25-55 Gew.-% Acrylnitril, bezogen auf das Gesamtgewicht des genannten Polymers, enthält,
(C) 25-45 Gew.-% Ruß mit einer Oberfläche von 30 bis 60 m² pro g und
(D) 0,2-5 Gew.-% eines organischen Peroxid-Vernetzungsmittels.

2. Vulkanisierbare Zusammensetzung nach Anspruch 1, worin der genannte Ruß eine Oberfläche von 40 bis 50 m²/g aufweist.

3. Vulkanisierbare Zusammensetzung nach einem der Ansprüche 1-2, worin der genannte Ruß in der genannten Zusammensetzung in einer Menge von 35 bis 40%, bezogen auf das Gewicht der Zusammensetzung, vorhanden ist.

4. Vulkanisierbare Zusammensetzung nach einem der Ansprüche 1-3, worin das genannten Ethylen-Vinylacetat-Copolymer in der genannten Zusammensetzung in einer Menge von 40 bis 60%, bezogen auf das Gewicht der genannten Zusammensetzung, anwesend ist.

5. Erzeugnis, das das vernetzte Produkt einer vulkanisierbaren halbleitenden Zusammensetzung nach einem der Ansprüche 1-4 umfaßt.

6. Erzeugnis nach Anspruch 5, worin der in der genannten vulkanisierbaren halbleitenden Zusammensetzung enhaltene Ruß eine Oberfläche von 40 bis 50 m²/g hat.

7. Erzeugnis nach einem der Ansprüche 5-6, worin der in der genannten vulkanisierbaren halbleitenden Zusammensetzung vorhandene Ruß in einer Menge von 35 bis 40 Gew.-%, bezogen auf das Gewicht der genannten Zusammensetzung, anwesend ist.

8. Erzeugnis nach einem der Ansprüch 5-7, worin das in der genannten vulkanisierbaren halbleitenden Zusammensetzung vorhandene Ethylen-Vinylacetat-Copolymer in einer Menge von 40 bis 60%, bezogen auf das Gewicht der genannten Zusammensetzung, anwesend ist.

9. Elektrischer Leiter, der als eine darin enthaltene Halbleiterschicht eine Zusammensetzung oder das vernetzte Produkt der Zusammensetzung nach einem der Ansprüche 1-4 enthält.

10. Zusammensetzung oder vernetztes Produkt der Zusammensetzung nach einem der Ansprüche 1-4, die direkt mit einem vernetzten Polyolefin-Substrat verbunden sind.

**Revendications**

1. Composition protectrice isolante semiconductrice vulcanisable consistant essentiellement en, sur la base du poids total de ladite composition,
(A) 40 à 65 % en poids d'un copolymère éthylène-acétate de vinyle contenant 27 à 45 % en poids d'acétate de vinyle sur la base du poids total dudit copolymère,
(B) 30 % en poids d'un copolymère acrylonitrile-butadiène contenant 25 à 55 % en poids d'acrylonitrile sur la base du poids total dudit copolymère,
(C) 25 à 45 % en poids d'un noir de carbone ayant une surface spécifique de 30 à 60 m²/g, et
(D) 0,2 à 5 % en poids d'un agent de réticulation du type peroxyde organique.

2. Composition vulcanisable suivant la revendication 1, dans laquelle le noir de carbone possède une surface spécifique de 40 à 50 m²/g.

3. Composition vulcanisable suivant au moins une des revendications 1 et 2, dans laquelle le noir de carbone est présent dans ladite composition en une quantité de 35 à 40 % sur la base du poids de la composition.

4. Composition vulcanisable suivant au moins une des revendications 1 à 3, dans laquelle le copolymère éthylène-acétate de vinyle est présent dans ladite composition en une quantité de 40 à 60 % sur la base du poids de ladite composition.

5. Article comprenant le produit réticulé d'une composition semiconductrice vulcanisable telle que définie dans au moins une des revendications 1 à 4.

6. Article suivant la revendication 5, dans lequel le noir de carbone présent dans la composition semiconductrice vulcanisable possède une surface spécifique de 40 à 50 m$^2$/g .

7. Article suivant au moins une des revendications 5 et 6, dans lequel le noir de carbone présent dans ladite composition semiconductrice vulcanisable est présent en une quantité de 35 à 40 % en poids sur la base du poids de la composition.

8. Article suivant au moins une des revendications 5 à 7, dans lequel le copolymère éthylène-acétate de vinyle présent dans ladite composition semiconductrice vulcanisable est présent en une quantité de 40 à 60 % sur la base du poids de ladite composition.

9. Conducteur électrique possédant comme couche semiconductrice la composition ou le produit réticulé de la composition suivant au moins une des revendications 1 à 4.

10. Composition ou produit réticulé de la composition suivant au moins une des revendications 1 à 4, lié directement à un substrat polyoléfinique réticulé.